# EUROPEAN PATENT APPLICATION

(11) **EP 4 624 845 A1**
(43) Date of publication of application: **01.10.2025**
(21) Application number: 25164097.5
(22) Date of filing: 17.03.2025
(51) Int. Cl.: F26B 3/04, F26B 21/10, F26B 21/12, F26B 25/22, H01M 4/04

(54) **DRYING CONTROL SYSTEM, DRYING FURNACE AND METHOD BASED ON ELECTRODE PLATE DRYING STATUS MONITORING**

(30) Priority: 29.03.2024 KR 20240043009
(71) Applicant: SAMSUNG SDI CO., LTD., Yongin-si, Gyeonggi-do 17084 (KR)
(72) Inventor: HONG, JINUK, 17084 Yongin-si, Gyeonggi-do (KR); KIM, JONGDAE, 17084 Yongin-si, Gyeonggi-do (KR)
(74) Representative: Gulde & Partner

(57) **Abstract**

Aspects disclosed herein include a control system that determines a control condition for electrode plate drying by monitoring a drying status of an electrode plate for a secondary battery, a drying furnace comprising the control system and an operation method thereof. Examples embodiments include a drying control system comprising at least one ultrasonic sensor (310, 320) suitable for being located in a heated drying area of a secondary battery electrode plate drying furnace; and a drying furnace controller (600) configured to monitor a drying state of an electrode plate using an ultrasonic transmission signal and/or an ultrasonic reflection signal received from the at least one ultrasonic sensor (310, 320), and configured to generate and transmit a drying heat amount control signal according to a result of the monitoring.

## Description

### BACKGROUND

### 1. Technical Field

Example embodiments of the present disclosure relate to a control system, a drying furnace comprising the control system and an operation method thereof, and more particularly, to a control system that determines a control condition for electrode plate drying by monitoring a drying status of an electrode plate for a secondary battery, a drying furnace comprising said control system and an operation method thereof.

### 2. Related Art

When coating and drying an electrode plate for a secondary battery, an X-ray type density meter is typically installed at the rear of a drying furnace, and the density of an electrode plate active material is measured to determine whether the coating is dry. The drying status of the electrode plate is typically not known until the electrode plate reaches the density meter installed at the rear of the drying furnace, and loss of many electrode plates may occur until the drying conditions of the electrode plate are optimized.

### SUMMARY

Accordingly, aspects of the present disclosure include a drying control system, a drying furnace and method for monitoring the drying status of an electrode plate by using an ultrasonic sensor provided for each drying furnace area during a secondary battery manufacturing process, and performing feedback control on the drying temperature based on monitoring results.

The technical problems to be solved by the present disclosure are not limited to the above-mentioned problems, and other problems not mentioned can be clearly understood by those skilled in the art from the description of the disclosure described below.

A first aspect of the present disclosure relates to a drying control system for monitoring an electrode plate drying status. The drying control system comprises at least one ultrasonic sensor suitable for being located in a heated drying area of a secondary battery electrode plate drying furnace; and a drying furnace controller configured to monitor a drying state of an electrode plate using an ultrasonic transmission signal and/or an ultrasonic reflection signal received from the at least one ultrasonic sensor, and configured to generate and transmit a drying heat amount control signal according to a result of the monitoring.

Preferably, the at least one ultrasonic sensor may comprise an ultrasonic transmitter and an ultrasonic receiver.

A second aspect of the present disclosure relates to a drying furnace for drying secondary battery electrode plates. The drying furnace comprises a plurality of heated drying areas inside the drying furnace; and a drying control system, which comprises at least one ultrasonic sensor located in at least one of the plurality of heated drying areas, and a drying furnace controller configured to monitor a drying state of the electrode plate using an ultrasonic transmission signal and or an ultrasonic reflection signal received from the at least one ultrasonic sensor, and configured to generate and to transmit a drying heat amount control signal according to a result of the monitoring.

Preferably, the plurality of heated drying areas may comprise an electrode plate surface solvent evaporation section, an electrode plate shrinkage section, a solvent evaporation section for solvent evaporation within electrode plate pores, and an electrode plate drying completion section.

In a preferred embodiment, at least one of the ultrasonic sensors may be located in the electrode plate surface solvent evaporation section, and the drying furnace controller may be configured to monitor whether an ultrasonic transmission signal is maintained below a standard and is configured to monitor whether a reflection signal is above a standard (e.g. a preset standard value).

Further preferred, one of the ultrasonic sensors may be located in the electrode plate shrinkage section, and the drying furnace controller may be configured to monitor whether an ultrasonic transmission signal increases above a preset slope due to a decrease in a thickness of the electrode plate.

Further preferred, one of the ultrasonic sensors may be located in the solvent evaporation section for solvent evaporation within electrode plate pores, and the drying furnace controller may be configured to monitor whether an ultrasonic transmission signal is reduced above a preset slope due to a decrease in density caused by an increase in a formation of electrode plate pores.

Further preferred, one of the ultrasonic sensors may be located in the electrode plate drying completion section, and the drying furnace controller may be configured to monitor whether a density change is maintained within a preset range.

In a preferred embodiment, the drying furnace may further comprise a density meter located subsequent to the plurality of heated drying areas in a drying process direction of the drying furnace.

In another preferred embodiment, the at least one ultrasonic sensor may comprise an ultrasonic transmitter and an ultrasonic receiver.

A third aspect of the present disclosure relates to a drying control method for monitoring a drying status of an electrode plate performed by a drying control system of an electrode plate drying furnace. The drying control method comprises (a) measuring an ultrasonic transmission signal and/or an ultrasonic reflection signal from the electrode plate by at least one ultrasonic sensor located in at least one of a plurality of heated drying areas of the electrode plate drying furnace and sending the ultrasonic transmission signal and/or the ultrasonic reflection signal to a drying furnace controller; and
(b) monitoring by means of the drying furnace controller a drying status of the electrode plate by using the ultrasonic transmission signal and/or reflection signal received by the ultrasonic sensor.

Preferably, when the ultrasonic sensor is located in a heated drying area being an electrode plate surface solvent evaporation section, monitoring the drying status of the electrode plate by means of the drying furnace controller may comprise monitoring whether an intensity of an ultrasonic transmission signal is maintained below a standard and/or whether an ultrasonic reflection signal is above a standard (e.g. a preset standard value).

Further preferred, when the ultrasonic sensor is disposed in a heated drying area being an electrode plate shrinkage section, monitoring the drying status of the electrode plate by means of the drying furnace controller may comprise monitoring whether an intensity of the ultrasonic transmission signal increases above a preset slope as a thickness of the electrode plate decreases.

Further preferred, when the ultrasonic sensor is located in a heated drying area being a solvent evaporation section for solvent evaporation within electrode plate pores, monitoring the drying status of the electrode plate by means of the drying furnace controller may comprise monitoring whether an intensity of the ultrasonic transmission signal is reduced above a preset slope due to a decrease in density caused by an increase in a formation of electrode plate pores.

Further preferred, when the ultrasonic sensor is located in a heated drying area being an electrode plate drying completion section, monitoring the drying status of the electrode plate by means of the drying furnace controller may comprise monitoring whether an intensity of the ultrasonic transmission signal is maintained within a preset range.

In a preferred implementation of the method, the method may further comprise
(c) generating a drying heat amount control signal based on a result of the monitoring by means of the drying furnace controller.

### BRIEF DESCRIPTION OF THE DRAWINGS

The following drawings illustrate example embodiments of the present disclosure, and further describe example aspects of the present disclosure together with the detailed description of the present disclosure. Thus, the present disclosure should not be construed as being limited to the drawings:
FIG. 1 illustrates a drying control system based on electrode plate drying status monitoring according to an example embodiment of the present disclosure;
FIG. 2 illustrates a configuration of an ultrasonic transmitter/receiver and a personal computer (PC), according to an example embodiment of the present disclosure;
FIG. 3 illustrates an electrode plate drying status monitoring process, according to an example embodiment of the present disclosure;
FIG. 4 illustrates a drying control method based on electrode plate drying status monitoring, according to an example embodiment of the present disclosure;
FIG. 5 is a block diagram illustrating a computer system for implementing a method according to an example embodiment of the present disclosure;

### DETAILED DESCRIPTION

Hereinafter, example embodiments of the present disclosure will be described, in detail, with reference to the accompanying drawings. The terms or words used in the present specification and claims are not to be limitedly interpreted based on their general or ordinary meaning, and should be interpreted as meanings and concepts that are consistent with the technical idea of the present disclosure on the basis of the principle that an inventor can be their own lexicographer to appropriately define concepts of terms to describe their invention in the best way.

The example embodiments described in this specification and the configurations shown in the drawings are only some example embodiments of the present disclosure and do not represent all of the aspects of the present disclosure. Accordingly, it should be understood that there may be various equivalents and modifications that can replace or modify one or more example embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges is within the scope of this invention.

References to two compared elements, features, etc. As being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The terminology used herein is for the purpose of describing example embodiments of the present disclosure and is not intended to limit the present disclosure.

An example of the present disclosure relates to a drying control system based on electrode plate drying status monitoring. The drying control system includes an ultrasonic sensor located in a preset area of a secondary battery electrode plate drying furnace; and a drying furnace controller that monitors a drying state of an electrode plate using a signal acquired from the ultrasonic sensor, and that generates and transmits a drying heat amount control signal according to a result of the monitoring.

The ultrasonic sensor is located in the preset area of at least one of an electrode plate surface solvent evaporation section, an electrode plate shrinkage section, a solvent evaporation section within electrode plate pores, and an electrode plate drying completion section.

When the ultrasonic sensor is disposed in the electrode plate surface solvent evaporation section, as a reflection signal above a preset standard is sensed by a surface solvent, the drying furnace controller monitors whether an ultrasonic transmission signal is maintained below a desired standard.

When the ultrasonic sensor is disposed in the electrode plate shrinkage section, the drying furnace controller monitors whether an ultrasonic transmission signal increases above a preset slope due to a decrease in a thickness of the electrode plate.

When the ultrasonic sensor is disposed in the solvent evaporation section within electrode plate pores, the drying furnace controller monitors whether an ultrasonic transmission signal is reduced above a preset slope due to a decrease in density caused by an increase in a formation of electrode plate pores.

When the ultrasonic sensor is disposed in the electrode plate drying completion section, the drying furnace controller monitors whether a density change is maintained within a preset range.

In another example embodiment, a drying control method based on electrode plate drying status monitoring includes (a) disposing an ultrasonic sensor in an electrode plate drying furnace; and (b) monitoring a drying status of an electrode plate based on ultrasonic transmission/reception information acquired using the ultrasonic sensor.

In operation(a), the ultrasonic sensor is disposed in at least one of an electrode plate surface solvent evaporation section, an electrode plate shrinkage section, a solvent evaporation section within electrode plate pores, and an electrode plate drying completion section.

When the ultrasonic sensor is disposed in the electrode plate surface solvent evaporation section, operation (b) is performed to monitor whether an intensity of an ultrasonic transmission signal is maintained below a certain standard as a surface solvent causes ultrasonic reflection above a preset standard.

When the ultrasonic sensor is disposed in the electrode plate shrinkage section, operation (b) is performed to monitor whether an intensity of an ultrasonic transmission signal increases above a preset slope as a thickness of the electrode plate decreases.

When the ultrasonic sensor is disposed in the solvent evaporation section within electrode plate pores, operation (b) is performed to monitor whether an intensity of an ultrasonic transmission signal is reduced above a preset slope due to a decrease in density caused by an increase in a formation of electrode plate pores.

When the ultrasonic sensor is disposed in the electrode plate drying completion section, operation (b) is performed to monitor whether an intensity of an ultrasonic transmission signal is maintained within a preset range.

The drying control method based on electrode plate drying status monitoring according to examples of the present disclosure may further include(c) generating an electrode plate drying heat amount control signal based on a result of the monitoring.

In an electrode plate coating and drying process, when a general method of measuring the density of an electrode plate through a density meter at the rear of a drying furnace is used, the coated electrode plate is passed through a number of heated drying areas (zones), the density of the electrode plate is measured through the density meter at the rear of the drying furnace (e.g. directly at or subsequent to the exit of the drying furnace), and the dry status of the electrode plate may be checked to make a pass/fail determination. When a fail determination has been made (e.g., non-dry/overdry), a process of allowing a re-coated electrode plate to pass through drying furnaces at a changed drying temperature, sending the re-coated electrode plate to the density meter, checking the drying status of the re-coated electrode plate, and optimizing drying conditions may be repeated.

According to such an example method, the drying status may not be monitored before the electrode plate reaches the density meter, and it may be difficult to reflect, in a drying recipe, the difference in suitable drying heat amount conditions varying depending on the thickness and composition ratio of the electrode plate. As a result, loss of electrode plates may occur during the process of repeating the electrode plate drying status check procedure and optimizing a drying condition. In addition, since drying furnace process conditions may be affected by seasonal temperature environments, quality problems for non-dried or over-dried products may be caused by environmental influences, even when the drying is performed under the same or similar process conditions. As an increase in the capacity of a secondary battery is required over time, changes occur in film thickening and active material composition ratio, making it more difficult to optimize temperature/heat amount control conditions for electrode plate drying after electrode plate coating.

In order to address the above challenges, examples of the present disclosure include a system and control method for monitoring the drying status of an electrode plate for each drying furnace area, and providing feedback to a drying furnace controller to control the temperature of the drying furnace in real time, thereby reducing or minimizing the time required for optimizing a drying process for each model of electrode plate and reducing loss of the electrode plate.

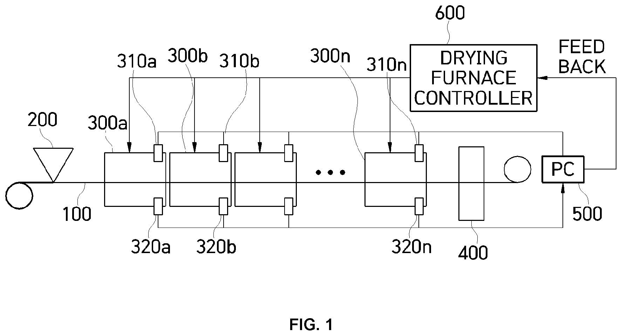

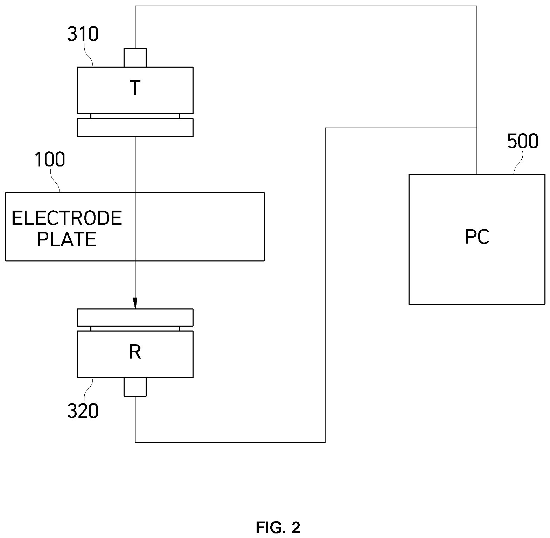

FIG. 1 illustrates a drying control system based on electrode plate drying status monitoring and the drying furnace, according to an example embodiment of the present disclosure, and FIG. 2 illustrates a configuration of an ultrasonic transmitter/receiver and a PC, according to an example embodiment of the present disclosure.

In FIG. 1, an electrode plate 100 having passed through a coater 200 passes through heated drying areas 300a, 300b, ..., 300n of the drying furnace, and is subjected to a pass/fail determination through electrode plate density measurement using a density meter 400 located at the rear of the drying furnace. Before reaching the density meter, ultrasonic sensors (including ultrasonic transmitters 310a, 310b, ..., 310n and ultrasonic receivers 320a, 320b, ..., 320n) may monitor the drying status of the electrode plate, and disposed for each drying furnace.

Like light, ultrasonic waves can be transmitted, reflected, refracted, and integrated, and the aspect of a transmitted signal varies depending on the density of a medium. When ultrasonic waves pass through a medium, the higher the density of the medium, the stronger the signal transmission. The lower the density of the medium, the weaker the signal transmission, and the reflectivity and transmittance differ depending on the medium. Using such ultrasonic characteristics, the difference in density depending on a drying status is sensed during an electrode plate drying process, and the drying status of an electrode plate is monitored. The ultrasonic sensors include the ultrasonic transmitter 310a, 310b, ..., 310n that generate ultrasonic waves and the ultrasonic receiver 320a, 320b, ..., 320n that detect ultrasonic signals, and a PC 500 measures and displays the ultrasonic signals, provides a notification, and provides feedback to a drying furnace controller 600.

According to an example embodiment of the present disclosure, by monitoring the signal strength of ultrasonic waves measured differently according to the solvent residual amount of an electrode plate and changes in an internal density of the electrode plate due to evaporation, the drying status of the electrode plate may be determined for each drying furnace area in real time, and real-time control of the amount of drying heat required for each drying furnace area may be achieved, thereby allowing the electrode plate to be maintained in an optimal drying status when the electrode plate passes through all areas of the drying furnace, and reducing the lead time for determining the drying status of the electrode plate after electrode plate coating.

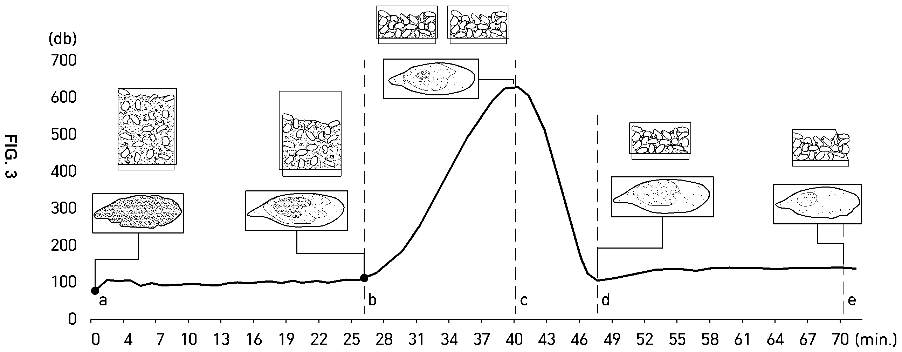

FIG. 3 illustrates an electrode plate drying status monitoring process, according to an example embodiment of the present disclosure. In FIG. 3, the x-axis represents time, and the y-axis represents the intensity of ultrasonic signal.

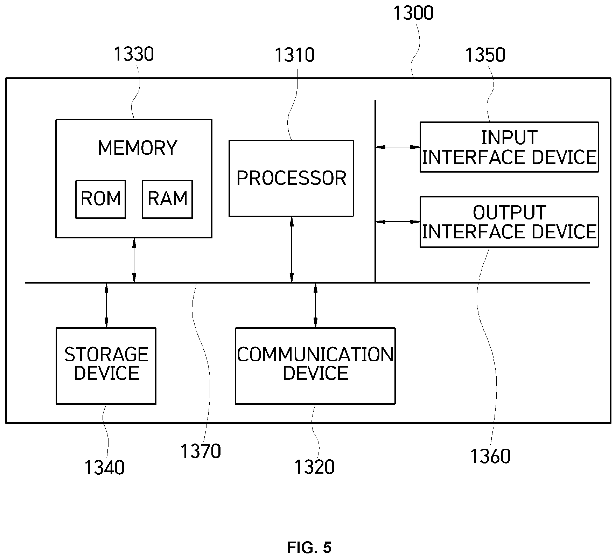

With reference to FIGS. 5 and 6, signals sensed by the ultrasonic sensors 310 and 320 are transmitted to the drying furnace controller 600 through the PC 500, and the drying furnace controller 600 uses feedback received from the PC 500 to control the amount of drying heat according to the drying status of the electrode plate at each drying stage.

In the process of drying the electrode plate, the solvent content on the surface and inside the active material of the electrode plate is changed, and the ultrasonic reflectivity and density of the active material on the surface of the electrode plate are changed. The drying status of the electrode plate is determined by monitoring changes in the density of the electrode plate through ultrasonic transmission and reception.

In an initial process of the electrode plate passing through the coater, a large amount of solvent may be present on the surface of the electrode plate, resulting in a high reflectance and low absorption rate for an ultrasonic signal generated from the ultrasonic transmitter 310, so that the intensity of an ultrasonic signal received from the ultrasonic receiver 320 is relatively low. When the ultrasonic sensor is located (disposed) in an electrode plate surface solvent evaporation section 300a (section a-b in FIG. 3 where the ultrasonic signal reflection by the electrode plate surface solvent is large and the ultrasonic transmission signal remains weak), as a large reflection signal above a preset standard is sensed by the surface solvent, the drying furnace controller 600 monitors whether the ultrasonic transmission signal is maintained below a certain standard (e.g. a preset standard value).

During a drying process, typically, the solvent on the surface of the electrode plate evaporates, the electrode plate shrinks, and the thickness of the electrode plate decreases. As the ultrasonic absorption rate increases on the surface of the electrode plate due to the solvent evaporation and the density of the electrode plate increases caused by a decrease in the thickness of the electrode plate, the intensity of the ultrasonic signal received by the ultrasonic receiver rapidly increases. When the ultrasonic sensor is located (disposed) in the electrode plate shrinkage section 300b (section b-c in FIG. 3 where the electrode plate shrinks after the electrode plate surface solvent evaporation, and the intensity of the ultrasonic transmission signal increases rapidly due to a decrease in the thickness of the electrode plate and an increase in the density of the electrode plate), the drying furnace controller 600 monitors whether the ultrasonic transmission signal increases above a preset slope due to a decrease in the thickness of the electrode plate.

As the solvent between the active material molecules inside the electrode plate evaporates in a state where the thickness of the electrode plate is no longer reduced, pores start to form inside and the density of the electrode plate decreases, thereby generating an inflection point where the transmission intensity of the ultrasonic signal also begins to decrease. When the ultrasonic sensor is located (disposed) in the solvent evaporation section within electrode plate pores (c-d section in FIG. 3 where the density decreases due to the formation of pores within the electrode plate and the intensity of the ultrasonic transmission signal rapidly decreases), the drying furnace controller 600 monitors whether the ultrasonic transmission signal is reduced above the preset slope due to a decrease in density caused by an increase in the formation of the electrode plate pores.

When all the solvent inside the electrode plate evaporates and the pores are substantially completely emptied, the time point, at which the density of the electrode plate remains substantially constant, the intensity of the ultrasonic reception signal remains substantially constant, and the ultrasonic reception signal remains substantially constant, is determined as a drying completion point. When the ultrasonic sensor is located (disposed) in the electrode plate drying completion section 300n (section d-e in FIG. 3 where no further solvent evaporation occurs, there is substantially no density change, and the intensity of the ultrasonic transmission signal is maintained below the preset standard), the drying furnace controller 600 monitors whether the density change is maintained within a preset or desired range.

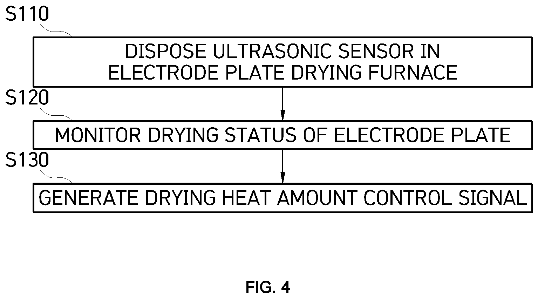

FIG. 4 illustrates a drying control method based on electrode plate drying status monitoring, according to an example embodiment of the present disclosure.

The drying control method based on electrode plate drying status monitoring, according to an example embodiment of the present disclosure, includes a step S110 of measuring an ultrasonic transmission signal and/or an ultrasonic reflection signal from the electrode plate by at least one ultrasonic sensor located in at least one of a plurality of heated drying areas of the electrode plate drying furnace and sending the ultrasonic transmission signal and/or the ultrasonic reflection signal to a drying furnace controller, and optionally disposing the ultrasonic sensor in the electrode plate drying furnace, a step S120 of monitoring the drying status of the electrode plate, and a step S130 of generating an electrode plate drying heat amount control signal based on the monitoring results. Hereinafter, each step in FIG. 4 will be described in detail.

S110: Optionally, disposing ultrasonic sensor in electrode plate drying furnace. Measuring an ultrasonic transmission signal and/or an ultrasonic reflection signal from the electrode plate by at least one ultrasonic sensor located in at least one of a plurality of heated drying areas of the electrode plate drying furnace and sending the ultrasonic transmission signal and/or the ultrasonic reflection signal to a drying furnace controller.

The ultrasonic sensors including ultrasonic transmitters and ultrasonic receivers are arranged in each drying area of the drying furnace.

The ultrasonic sensors are located (disposed) in the electrode plate surface solvent evaporation section (e.g., the section where the ultrasonic signal reflection by the electrode plate surface solvent is large and the ultrasonic transmission signal remains weak), the electrode plate shrinkage section (e.g., the section where the electrode plate shrinks after the electrode plate surface solvent evaporation, and the intensity of the ultrasonic transmission signal increases rapidly due to a decrease in the thickness of the electrode plate and an increase in the density of the electrode plate), the solvent evaporation section within electrode plate pores (e.g., the section where the density decreases due to the formation of pores within the electrode plate and the intensity of the ultrasonic transmission signal rapidly decreases), and the electrode plate drying completion section (e.g., the section where no further solvent evaporation occurs, there is no density change, and the intensity of the ultrasonic transmission signal is maintained below the preset standard).

### S120: Monitoring drying status of electrode plate

Because the ultrasonic reflectivity and active material density of the electrode plate surface typically change during the electrode plate drying process in which the solvent content on the surface of the active material of and inside the electrode plate is changed, changes in the density of the electrode plate and the drying status of the electrode plate are monitored using the ultrasonic sensor. The drying status of the electrode plate having passed through the coater is monitored using the ultrasonic sensor disposed in each drying furnace area, and the PC receives signals sensed by the ultrasonic sensor and provides feedback to the drying furnace controller.

In the electrode plate surface solvent evaporation section, a large amount of solvent is typically present on the surface of the electrode plate, resulting in a high reflectance and low absorption rate for an ultrasonic signal generated from the ultrasonic transmitter, so that the intensity of an ultrasonic signal received from the ultrasonic receiver is relatively low. In this section, monitoring may be performed to determine whether the ultrasonic transmission signal is maintained below the given standard by the solvent on the surface of the electrode plate.

In the electrode plate shrinkage section, the solvent on the surface of the electrode plate typically evaporates, the electrode plate shrinks, and the thickness of the electrode plate decreases. As the ultrasonic absorption rate increases on the surface of the electrode plate due to the solvent evaporation, and the density of the electrode plate increases caused by a decrease in the thickness of the electrode plate, the intensity of the ultrasonic signal received by the ultrasonic receiver rapidly increases. In this section, monitoring may be performed to determine whether the ultrasonic transmission signal increases above the preset slope due to a decrease in the thickness of the electrode plate.

In the solvent evaporation section within the electrode plate pores, as the solvent between the active material molecules inside the electrode plate typically evaporates in a state where the thickness of the electrode plate is no longer reduced, pores may start to form inside, the density of the electrode plate may decrease, and the transmission intensity of the ultrasonic signal may also start to decrease. In this section, monitoring is performed to determine whether the ultrasonic transmission signal is reduced above the preset slope due to a decrease in density caused by an increase in the formation of the electrode plate pores.

In the electrode plate drying completion section, when substantially all of the solvent inside the electrode plate evaporates and the pores are substantially emptied, the density of the electrode plate remains substantially constant and the intensity of the ultrasonic reception signal remains substantially constant. In this section, monitoring is performed to determine whether the density change is maintained within the preset range.

### S130: Generating electrode plate drying heat amount control signal

Ultrasonic signals are measured and displayed, notifications are provided, and feedback is provided to the drying furnace controller. Referring to the feedback, the drying status of the electrode plate for each drying furnace area is checked in real-time, and the amount of drying heat required for each drying furnace area is controlled in real-time.

According to another example embodiment of the present disclosure, before performing monitoring and drying control, learning about changes in ultrasonic transmission signals according to changes in density of the electrode plate is performed. In step S130, a command for the amount of drying heat is preset based on the results monitored in step S120 (e.g., a command related to the amount of drying heat is set/maintained by checking whether previously learned changes in the ultrasonic transmission signal are being followed), and the amount of drying heat is controlled. When the trend of changes in the ultrasonic transmission signal monitored in step S120 is different by more than a standard value compared to the previously learned changes in the ultrasonic transmission signal, step S130 uses the monitoring result to control the amount of drying heat according to the drying status of the electrode plate at each drying stage.

According to another example embodiment of the present disclosure, when the difference in the amount of change in the ultrasonic transmission signal over time monitored in step S120 is greater than a standard or desired value, it is determined that changes in the ultrasonic transmission signal do not follow the previously learned changes in the ultrasonic transmission signal due to environmental factors, etc., and a control command for changing the setting of the amount of drying heat may be generated. At this time, the hourly change in the amount of drying heat may be readily controlled to be above a preset value, or controlled to be below the preset value, or control may be performed to change the amount of drying heat during a preset or desired time interval.

According to another example embodiment of the present disclosure, when performing control to change the amount of drying heat, a temporal factor (e.g., specific drying heat amount maintenance time), a numerical factor of amount of drying heat (e.g., specific drying heat amount value), and a factor related to the amount of change in a drying heat amount for each drying area (e.g., value of change in the amount of drying heat set relatively for each adjacent drying area) can be adjusted, and it is possible to finally control changes in the setting of the amount of drying heat by adjusting a weight for each factor.

FIG. 5 is a block diagram illustrating a computer system for implementing a method according to an example embodiment of the present disclosure.

Referring to FIG. 5, the computer system 1300 may include at least one of a processor 1310, a memory 1330, an input interface device 1350, an output interface device 1360, and a storage device 1340 communicating with one another through a bus 1370. The computer system 1300 may also include a communication device 1320 coupled to a network. The processor 1310 may be or include a central processing unit (CPU) or a semiconductor device that executes instructions stored in the memory 1330 or in the storage device 1340. The memory 1330 and the storage device 1340 may include various types of volatile or nonvolatile storage media. For example, the memory may include a read-only memory (ROM) and a random access memory (RAM). In example embodiments of the present disclosure, the memory may be located inside or outside the processor, and may be connected to the processor through various known means. The memory is or includes various types of volatile or nonvolatile storage media, and for example, may include a read-only memory (ROM) or a random access memory (RAM).

Accordingly, example embodiments of the present disclosure may be implemented as a method implemented in a computer or a non-transitory computer-readable medium storing computer-executable instructions. In an example embodiment, when executed by the processor, computer-readable instructions may perform a method according to at least one aspect of the present disclosure.

The communication device 1320 may transmit or receive wired signals or wireless signals.

Additionally, the method according to an example embodiment of the present disclosure may be implemented in the form of program instructions that can be executed through various computer means and recorded on a computer-readable medium.

The computer-readable medium may include program instructions, data files, data structures, etc., singly or in combination. The program instructions recorded on the computer-readable medium may be specially designed and configured for the example embodiments of the present disclosure, or may be known and usable by those skilled in the art of computer software. Computer-readable recording media may include a hardware device configured to store and perform program instructions. For example, the computer-readable recording media may be or include magnetic media such as hard disks, floppy disks, and magnetic tapes, optical media such as CD-ROMs and DVDs, magneto-optical media such as floptical disks, ROM, RAM, flash memory, etc. The program instructions may include not only machine language codes such as that generated by a compiler, but also high-level language codes that can be executed by a computer through an interpreter, etc.

According to examples of the present disclosure, considering that the typically high investment cost per unit of a density meter makes it relatively costly when installed in various areas of a drying furnace, and installation thereof inside the drying furnace is difficult in terms of size, a difference in an ultrasonic transmission state due to a density difference depending on the drying status of an electrode plate may be monitored through an ultrasonic sensor, and the amount of drying heat inside the drying furnace may be controlled in real-time based on the monitoring results. Accordingly, when an electrode plate composition or a loading level is changed after a job change, or the surrounding air temperature is changed due to seasonal effects, and the like, it is possible to greatly reduce the trials and errors in a process of optimizing electrode plate drying conditions at the beginning of a process, minimize loss of the electrode plate, and improve the productivity of drying furnace equipment and the overall efficiency of an electrode plate drying process.

However, effects that can be achieved through the present disclosure are not limited to the above-described effects, and other technical effects not mentioned will be clearly understood by those skilled in the art from the description of the invention described below.

Although the present disclosure has been described above with respect to example embodiments thereof, the present disclosure is not limited thereto. Various modifications and variations can be made thereto by those skilled in the art within the scope of the present disclosure and the equivalent scope of the appended claims.

## Claims

1. A drying control system for monitoring an electrode plate drying status, the drying control system comprising:
at least one ultrasonic sensor (310, 320) suitable for being located in a heated drying area of a secondary battery electrode plate drying furnace; and
a drying furnace controller (600) configured to monitor a drying state of an electrode plate using an ultrasonic transmission signal and/or an ultrasonic reflection signal received from the at least one ultrasonic sensor (310, 320), and configured to generate and transmit a drying heat amount control signal according to a result of the monitoring.

2. A drying furnace for drying secondary battery electrode plates, the drying furnace comprising:
a plurality of heated drying areas (300a, 300b, 300n) inside the drying furnace; and
a drying control system comprising:
at least one ultrasonic sensor (310, 320) located in at least one of the plurality of heated drying areas, and
a drying furnace controller (600) configured to monitor a drying state of the electrode plate using an ultrasonic transmission signal and or an ultrasonic reflection signal received from the at least one ultrasonic sensor (310, 320), and configured to generate and to transmit a drying heat amount control signal according to a result of the monitoring.

3. The drying furnace according to claim 2, wherein the plurality of heated drying areas comprises:
an electrode plate surface solvent evaporation section (300a),
an electrode plate shrinkage section (300b),
a solvent evaporation section for solvent evaporation within electrode plate pores, and
an electrode plate drying completion section (300n).

4. The drying furnace according to claim 3, wherein at least one of the ultrasonic sensors (310, 320) is located in the electrode plate surface solvent evaporation section, and the drying furnace controller (600) is configured to monitor whether an ultrasonic transmission signal is maintained below a standard and is configured to monitor whether an ultrasonic reflection signal is above a standard.

5. The drying furnace according to one of claims 3 or 4, wherein one of the ultrasonic sensors (310, 320) is located in the electrode plate shrinkage section, and the drying furnace controller (600) is configured to monitor whether an ultrasonic transmission signal increases above a preset slope due to a decrease in a thickness of the electrode plate (100).

6. The drying furnace according to one of claims 3 to 5, wherein one of the ultrasonic sensors (310, 320) is located in the solvent evaporation section for solvent evaporation within electrode plate pores, and the drying furnace controller (600) is configured to monitor whether an ultrasonic transmission signal is reduced above a preset slope due to a decrease in density caused by an increase in a formation of electrode plate pores.

7. The drying furnace according to one claims 3 to 6, wherein one of the ultrasonic sensors (310, 320) is located in the electrode plate drying completion section, and the drying furnace controller (600) is configured to monitor whether a density change is maintained within a preset range.

8. The drying furnace according to one of claims 3 to 7, further comprising a density meter (400) located subsequent to the plurality of heated drying areas in a drying process direction of the drying furnace.

9. The drying furnace according to one of claims 3 to 8 and the drying control system according to claim 1, wherein the at least one sensor comprises an ultrasonic transmitter (310a, 310b, 310n) and an ultrasonic receiver (320a, 320b, 320n).

10. A drying control method for monitoring a drying status of an electrode plate performed by a drying control system of an electrode plate drying furnace, the drying control method comprising:
(a) measuring an ultrasonic transmission signal and/or an ultrasonic reflection signal from the electrode plate (100) by at least one ultrasonic sensor (310, 320) located in at least one of a plurality of heated drying areas of the electrode plate drying furnace and sending the ultrasonic transmission signal and/or the ultrasonic reflection signal to a drying furnace controller (600); and
(b) monitoring by means of the drying furnace controller (600) a drying status of the electrode plate (100) by using the ultrasonic transmission signal and/or ultrasonic reflection signal received by the ultrasonic sensor (310, 320).

11. The drying control method according to claim 10, wherein, when the ultrasonic sensor (310, 320) is located in a heated drying area being an electrode plate surface solvent evaporation section, monitoring the drying status of the electrode plate (100) by means of the drying furnace controller (600) comprises monitoring whether an intensity of an ultrasonic transmission signal is maintained below a standard and/or whether an ultrasonic reflection signal is above a standard.

12. The drying control method according to one of claims 10 or 11, wherein, when the ultrasonic sensor (310, 320) is disposed in a heated drying area being an electrode plate shrinkage section, monitoring the drying status of the electrode plate by means of the drying furnace controller (600) comprises monitoring whether an intensity of the ultrasonic transmission signal increases above a preset slope as a thickness of the electrode plate (100) decreases.

13. The drying control method according to one of claims 10 to 12, wherein, when the ultrasonic sensor (310, 320) is located in a heated drying area being a solvent evaporation section for solvent evaporation within electrode plate pores, monitoring the drying status of the electrode plate (100) by means of the drying furnace controller (600) comprises monitoring whether an intensity of the ultrasonic transmission signal is reduced above a preset slope due to a decrease in density caused by an increase in a formation of electrode plate pores.

14. The drying control method according to one of claims 10 to 13, wherein, when the ultrasonic sensor (310, 320) is located in a heated drying area being an electrode plate drying completion section, monitoring the drying status of the electrode plate (100) by means of the drying furnace controller (600) comprises monitoring whether an intensity of the ultrasonic transmission signal is maintained within a preset range.

15. The drying control method according to one of claims 10 to 14, further comprising:
(c) generating a drying heat amount control signal based on a result of the monitoring by means of the drying furnace controller (600).
